# EUROPEAN PATENT APPLICATION

(11) **EP 1 672 866 A1**
(43) Date of publication of application: **21.06.2006**
(21) Application number: 04425920.8
(22) Date of filing: 15.12.2004
(51) Int. Cl.: H04L 29/06

(54) **Method and system to the instant transfer of multimedia files between mobile radio users within the scope of combinational services**

(71) Applicant: Siemens S.p.A., 20126 Milano (IT)
(72) Inventor: De Zen, Giovanni, 31011 Asolo (IT); Gallassi, Giorgio, 20010 Cornaredo (IT)

(57) **Abstract**

Among combinational services to be implemented inside 2^{1/2} or 3^{rd} generation PLMNs upgraded with IMS, most recent proposals consist of establishing a CS voice call and successively set up an IP multimedia session for transferring one or more recorded multimedia file between peer mobile terminals during the ongoing CS call. To accomplish this type of service a Call Recognizer (CR) process is running on each IMS enabled mobile terminal, either multiRAB or DTM. Such process can be understood as an Extension of a classical IMS Client (EIC). Independently of the CS call being originated or terminated, the CR process detects the CS call acceptance from the respective user and automatically triggers the IMS registration procedure for that user. to inform the IMS core about the handset capabilities on handling real-time or nearly real-time services. Similarly, the CR process detects the CS call release and automatically triggers the IMS de-registration procedure. Within the scope of combinational service, according to a first service mode named "Push To Show (PTS)" or an its extension named "Multiparty Video Messaging (MVM)" the mobile terminal is enabled to the instantaneous and reliable transfer of big multimedia files (e.g. around 10 kbytes for each second of recorded video). The Push action by a requesting user triggers a SIP session to catch the IMS identity of the peer user. To this aim the extended client interrogates a Domain Resolution Server (DRS) inside the IMS to get the domain name of the peer user given its MSISDN. A TCP socket for transferring the recorded file end-to-end is also negotiated during the SIP session. The SIP INVITE message is upgraded with additional SDP protocol lines including parameters to lead file transfer. The extended client builds up a command to get the multimedia file (fig.3).

## Description

### FIELD OF THE INVENTION

The present invention relates to the field of the PLMN networks upgraded with IP connection, and more precisely to a method and system to the instant transfer of multimedia files between mobile radio users within the scope of combinational services. To help the understanding of the description, a list of used acronyms and a list of bibliographic references are given at the end of the description.

### BACKGROUND ART

Nowadays a large integration between IP and PLMN networks is under way to the benefit of wireless customers who may enjoy a lot of attractions offered by IP over traditional telecommunications protocols and in meanwhile experiencing "seamless" communications over the different types of networks which their calls may pass. This facilitates a wide diversity of communications scenarios and combination of services.

The core of the IP-PLMN integration is a 3GPP platform named IMS which has been introduced appositely to offer to the operators, the service providers, and the clients the sort of service capabilities that IP is designed to provide. The primary focus of the IMS platform is that to provide the users/clients with the ability to join multimedia session in which they are allowed to send and receive voice and data communications even when roaming. The use of IMS in 3G systems will be optional, but is expected to be seen by operators as an attractive choice for enhancing 3G packet mode operation. The IMS will use the emerging IP version 6 (IPv6) together with SIP protocol for the establishment of sessions and the service provisioning on mobile networks. SIP is an application-layer control (signalling) protocol for creating, modifying and terminating sessions with two or more participants. These sessions include Internet multimedia conferences, Internet telephone calls, presence service and multimedia distribution, etc. SIP supports user mobility by proxying and redirecting requests to the user's current location. For more details see **[RFC3261]** listed at the end of the present specification. For the same purpose **[TS_22.228]** identifies the necessary requirements from the user point of view. Concerning SIP these brief notices are useful: SIP is based on an HTTP-like request/response transaction model; each SIP transaction consists of a request that invokes a particular method, or function, on the server and at least one response. A header is a component of a SIP message that conveys information about the message, it is structured as a sequence of header fields. Header fields are named attributes that provide additional information about a message. The details of the session, such as the type of media, codec, or sampling rate, are not described using SIP. Rather, the body of a SIP message contains a description of the session, encoded in some other protocol format. One such format is the Session Description Protocol (SDP) **[RFC2327]**. The SDP body is carried by the SIP message in a way that is analogous to a document attachment being carried by an email message, or a web page being carried in an HTTP message: for HTTP see **[RFC2616]**.

**[TS_22.101]** covers the requirements for simultaneous use of several connections and simultaneous use of different services. Section 7.1 states: *"3GPP specifications shall enable the user of* a *single terminal to establish and maintain several connections simultaneously. It shall efficiently cater for applications which have variable requirements relating to specific QoS parameters (e.g. throughput) whilst meeting other QoS targets. It shall also cater for applications which are able to adapt to a range of variations in QoS".* And in section 15.3: *"In general it is a requirement to allow the use of independent services simultaneously (i.e. Basic, GPRS, IP multimedia and operator specific)".*

The existing capability to use simultaneous services stated in **[TS_22.101]** can be used to create services that combine existing services so that they look as a single service for the end user. Latest discussions in 3GPP on the service principles are addressing the capability to combine different types of services inside the wireless networks and the mobile equipments. The variegated scenario of services foresees Circuit Switched (CS) services and Packet Switched (PS) services diversely combined among them. Accordingly, the user handset shall be either multi-RAB or dual mode depending on belonging either to the 3^{rd} or 2.5^{th} generation.

**[TR_23.899]** investigates overall architectural requirements and alternatives for using existing CS Bearers (CSB) in association with an IM session. The Feasibility Study covers different solutions for offering existing IMS simultaneous services (real-time media + non-real-time media) also in GERAN, where conversational PS spectrum efficiency is too low. The target is to seek for an architectural solution that is completely transparent for the end-user, and is easily interoperable with existing IMS services and networks that don't use this solution. The interworking between different terminals is considered in Sub-section 5.3. Terminals like CSB UEs are considered in this document. A CSB UE is a terminal that uses a CS bearer for the voice component of an IMS session. These type of UEs are not compliant with the ones considered by the invention applied for. With that the cited document, in spite of its proposed architecture and detailed exemplary call flows, shouldn't be considered as relevant prior art.

**[S1_040397]** addresses the combination of CS telephony calls with IP Multimedia services. This document proposes to add a new abbreviation CSI (Combined CS and IP Multimedia) to the sub-clause 3.2 (Abbreviations) and a new sub-clause 7.2.X titled: "Combined CS and IP Multimedia (CSI) Services", having the precise aim of clarifying the requirements on the combinations of existing services. According to the sub-clause 7.2.X, different requirements shall be fulfilled, among them the following one is particularly addressing the invention which is applied for:
*"When two users have a telephony call (TS11) set up between them either one of the users shall be able to also set up a simultaneous IP Multimedia session between themselves. The above shall be possible for telephony calls sessions without the users having to indicate any intention to set up a simultaneous session later".*

### APPROACH TO THE TECHNICAL PROBLEMS

Except for the above general statement sounding as a mere declaration of intents, nothing else is said about the type of IP Multimedia session and the modalities of setting up it during the existing CS call. A first question the skilled in the art is forced to give solution when the sub-clause 7.2.X is put into practice is how maintaining the assumptions stated for combinational services when an IP Multimedia session is added to a CS voice call already established between two end users. A difficulty to answer to the first question is arising from the IMS registration procedure to be necessarily executed by the involved users before any subsequent IP Multimedia session can be carried out (see TS_23.228). In fact, due to the IMS registration, the CS call and the IP Multimedia session might be considered as two separate services by the end users, hence no more compliant with the combinational service premises. A second question is how to manage heterogeneity of IMS clients and their capabilities. A third question is how to get SIP address of peer user when the address cannot be retrieved from the local address book given the peer user MSISDN. A fourth question is sounding as the following: are there IP multimedia services suitable to implement a reliable peer-to-peer and instant transfer of large files between mobile users nearly in real-time? A positive answer might encourage investments on the research and development of new combinational services. Concerning the latter question, the panorama of IP multimedia services to be examined includes:
1. Multimedia Messaging Service (MMS). MMS enables the transfer of big files like video files but neither provide real-time nor nearly real-time transfer service. In fact, even when the MMS message is directly delivered to the target user like in the Video Messaging Service provided by some UMTS mobile operators, the transfer takes around 100 seconds for a video file of 100 kbytes using an Interactive bearer of 64 kbps.
2. Instant Messaging (IM). IM service is designed to enable the instant transfer of small files (e.g. images) or text. In fact, IM typically relies on an unreliable transport service like in the case of the bunch of SIMPLE IETF protocols where IM service uses SIP Message over UDP. In order to have the SIP message loss equal to the IP message loss, i.e. of 10⁻³, the SIP MTU must be set to 1300 bytes in a mobile network. Being the SIP MTU so small and being SIP over UDP, SIP MESSAGE over UDP is not suitable for transferring video files between mobile end users when transfer time has to be minimized.
3. Video call as supported by UMTS networks. Video call is a service for real-time transmission of audio/video information between mobile users end-to-end. This service is quite expensive and therefore its use is limited. In addition, it wastes a lot of radio resources because video is transmitted for all the duration of the call. Moreover, mobile users are more in favour of sending to the peer only the images they really want to share.
4. PushToTalk over Cellular **[PoC_User]** specified by OMA and its extension to video. The extension of PoC to video is a new service for nearly real-time transmission of audio/video information between mobile users point-to-multipoint. This service imposes heavy requirements on both the mobile phone and the application running on top of it. In particular, the application must support the real-time acquisition, coding and transmission of both audio and video information. Handsets able to support this class of services will only be the top class ones.

As a conclusion of the fourth question, the known IMS implementations for handling peer-to-peer interactions between mobile users are not able to fully support the requirements of a service which combines a traditional CS voice call with an IP multimedia service for the instant transfer of large (50 to 100 kbytes) files between mobile users. Despite this negative conclusion, the "Push-to" type services are the ones more easily adaptable to the requirements of the invention which is applied for.

Considering now the only "Push-to" type services in concomitance with the first three questions, it has to be noted how the standard IMS architecture guarantees that mobile users are addressable regardless of their actual IP address, thanks to either their SIP or TEL URL, i.e. their public user identities. In addition, SIP provides methods for session management which can be used to verify user willingness to receive the video recorded by a remote mobile user. Given that today mobile users cannot be always registered as IMS users (this is due both to the usage of IPv4 addresses and to optimization policies for Call State Control Function (CSCF) dimensioning) a solution for triggering IMS registration and de-registration procedures is needed.

### OBJECTS OF THE INVENTION

The proposed invention is intended to enable the exchange of audio/video information between mobile phones engaged in a CS voice call in near real-time fashion and in transparent way. The transfer of recorded audio/video contents shall be instantaneous in the sense that the content shall be delivered immediately as for instant messages. The instantaneous transfer shall be reliable because it must guarantees that no information is lost. The instantaneous and reliable transfer shall allow the transfer of big multimedia files (e.g. around 10 kbytes for each second of recorded video) by simply pushing a button on the mobile handset. According to a first mode, pushing the button shall allow the instant and reliable transfer of a multimedia file/s between the only two peer users involved in the voice call. According to a second mode, pushing the button shall allow the instant and reliable transfer of mobile recorded audio/video content from one sender to more than one receivers involved in a multiparty call with the sender, or to the peer involved in the voice call and to additional mobile users who are selected from the address book. The combinational services shall be possible on mobile phones (and networks) having either MultiRAB or Dual Transfer Mode (DTM) capability, to say able to simultaneously support Circuit Switched and Packet Switched connections. The combinational services shall be valid for scenarios where IPv4 is still used or for IPv6 based packet switched domains. In order to implement the two service modes defined above, the following technical issues must be solved:
- client application retrieval of the called user MSISDN. (N.B.: if the calling user provides his Calling Line Identity - his MSISDN - also the called user can start the push service);
- client application retrieval of the IP address assigned to the other party given the user MSISDN;
- understanding if remote client does support the requested service;
- allowing the sender to check the receiver willingness to accept the audio/video content recorded by the sender;
- transferring of a large multimedia file (around 100 kbytes corresponding to about 10 seconds of coded video) from client application of the sender to the client application of the receiver.

The same assumptions and the same technical issues identified for the first service mode shall be valid also for the second. In addition, the second mode shall require a solution for allowing the sender to transmit the recorded video only once over the air interface.

According to the whole requirements of above the main object of the present invention is that to give answer to the raised questions, with preference to the first one in order to qualify the service as really combinational.

### SUMMARY AND ADVANTAGES OF THE INVENTION

The invention achieves said objects by providing a method for implementing combinational services like multimedia file transfer between cellular phones (also named mobile terminals) engaged in a CS voice call inside a PLMN connected to IMS, as disclosed in the method claims.

The method of the invention satisfies the requirements of the aforementioned first service mode, named "Push To Show (PTS)" by the inventors themselves. The PTS is extended to satisfy the requirements of the second service mode, named "Multiparty Video Messaging (MVM)" by the inventors themselves.

According to a main feature of the claimed PTS method, the IMS Client process running inside each mobile terminal is extended to recognise the very establishment instant of the CS voice call, in order to start up an IMS registration procedure for registering as SIP user the owner of the mobile terminal. Registration provides IMS with the IP user identity, also termed IMS user identity, and the services capabilities of the mobile terminal. Pushing a button on either one of the peer terminals engaged in the CS voice call, or performing a push equivalent action, the user who requests the service starts up a SIP session leading to the file transfer. The SIP session is started by an INVITE request from the requester directed to the peer user, whose final IP identity has to be resolved by IMS and returned to the requester in case the true IP address is unknown. The chain of events started up by pushing a button leads the peer user to send a GET command to the requesting user to get the recorded multimedia file from the requester through a previously negotiated TCP socket. The IMS Client process is extended to recognise the very release instant of the CS call. As soon as the very release instant is detected the IMS de-registration of the user is started, either automatically or on request.

In conclusion, the features of classical IMS Clients running inside the mobile terminals are extended with the features of a Call Recognizer (CR) process to obtain an Extended IMS Client (EIC). Thanks to EIC the IMS registration procedure is made transparent to the end users in a way that the combined services look like a single service for them, just in agreement with the given definition of combinational services. The advantage introduced by EIC is that an IMS registration is performed only when it is really needed and then is promptly cancelled; with that the usage of expensive IMS resources is limited to the minimum actually required.

The claimed PTS method gives satisfactory answers to all the four aforementioned raised questions. In particular, to give correct answer to the fourth question a pair of TCP sockets is used by the involved Clients for sending/receiving the recorded multimedia file end-to-end. The EIC is further extended to deal with an extended SIP INVITE request message and a new GET command provided ad hock to carry out a reliable end-to-end transfer file. The SIP INVITE is extended by the addition of some SDP lines including new attributes in the body of the message, as will be detailed later in the description.

In order to provide the PTS service on the whole network, the IMS is extended with the inclusion of a new Domain Resolution Server (DRS) to cope with inter-domain scenarios for retrieval the IP identity of an user given its MSISDN, as will be detailed later on. Hence, other object of the invention is an IM Core Network Subsystem including a PTS server.

In order to provide MVM service, the IMS architecture is extended to include a new server named Multiparty Video Messaging Server (MVMS). The MVMS is responsible for handling with MVM scenarios where the recorded video should be delivered to two or more destinations. The MVM server is responsible for bridging the instant transfer of the recorded video between the sender and the receivers. The recorded video is transferred only once between the sender and the MVMS. In particular, the recorded video is sent to MVMS only if at least one of the receivers is reachable. Then, as soon as each receiver accepts the file, the recorded video is delivered by the MVMS with the reliable instant transfer. MVMS can store recorded videos to be delivered to not directly reachable users until the file validity time expires.

The claimed IMS architecture makes possible services like PTS and MVM by reusing existing IMS architecture which has to be extended but with limited impacts.

Other object of the invention is a cellular phone upgraded to operate in accordance with the method of claim 1, as disclosed in the device claim. The claimed cellular phone includes CS call recognising means arranged to either start up an IMS registration procedure in concomitance with call set up, or an IMS de-registration procedure in concomitance with call release.

### BRIEF DESCRIPTION OF THE DRAWINGS

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:
- **fig.1** depicts a possible network scenario for implementing combinational service according to the present invention;
- **fig.2** shows the functional configuration of the IMS described in **[TS_23.002]** upgraded according to the present invention;
- **figures 3a** and **3b** show the message flow of the combinational service protocol of the invention running inside the network scenario of fig.1;
- **fig.4** shows the message flow of the Push to Show (PTS) multimedia service included in the combinational service of the figures 3a and 3b;
- **figures 5a** and **5b** show the message flow of a Multiparty Video Messaging (MVM) protocol which shall be understood as an extension of PTS.

### DETAILED DESCRIPTION OF SOME PREFERRED EMBODIMENTS OF THE INVENTION

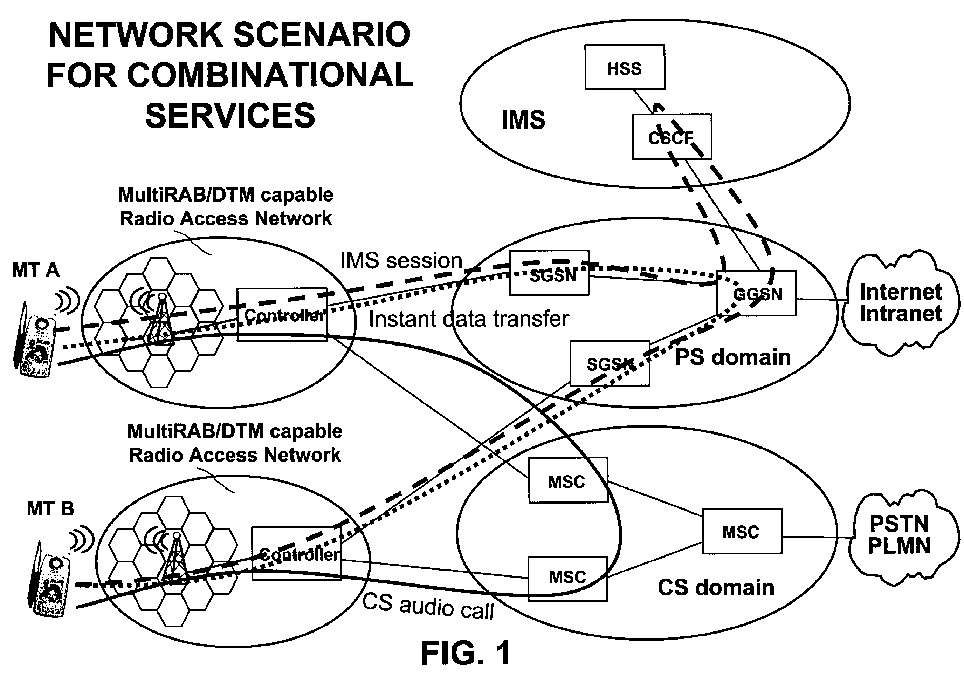

**Fig.1** shows a simplified communication scenario including a PLMN network interconnected to a PSTN, another PLMN, Internet and Intranet. Without limitations the architecture depicted in **fig.1** can be largely derivable from 3GPP Technical Specifications (TS), also considering the consolidated IETF RFCs. The PLMN is subdivided into a Core Network (CN) connected to two Access Networks for two respective Mobile Terminals MT A and MT B (also termed UE or MS). The Core Network includes the CS domain, the PS domain based on GPRS, and IMS connected to the PS domain. The two Access Networks and their Mobile Terminals MT A and MT B have either multiRAB or Dual Transfer Mode (DTM) capability. The Access Network includes a plurality of serving cells each of them corresponding to the coverage area generated by a respective Base Station. All the Base Stations of an Access Network are connected to a common Controller able to handle both Circuit Switched calls and Packet Data transmissions in parallel. Inside the Core Network the CS domain includes two levels of cascaded MSCs network elements; at the first level the MSCs are connected to respective Controllers belonging to different Access Networks through as many CS paths and interfaces; at the second level a single MSC is connected to the PSTN and to another PLMN. The PS domain includes two SGSN network elements each connected to a Controller inside an Access Network through a PS path and relevant interfaces. The two SGSNs are connected to a single GGSN network element, in its turn connected to the Internet network and to a CSCF functional block inside the IMS domain. Inside the IMS domain the CSCF is connected to two functional blocks named HSS and DRS.

Impressed on the figure three curved lines independently departing from either mobile terminal MT A or MT B and arriving to the other MT B or MT A indicates the paths taken by the CS call, the multimedia contents, which together characterise the combinational service, and a third path taken by the IMS signalling involved with this type of service. The continuous line of the CS call departing from either one of the two terminals MT A, MT B crosses in the order: the Base Station of the cell serving the caller, the connected Controller, the two first level MSCs inside the CS domain, a second Controller inside the Access Network of arrival, and the Base Station of the cell serving the callee. The dotted line of the multimedia contents departing from either one of the two terminals MT A, MT B crosses in the order: the Base Station of the cell serving the data sender, the connected Controller, a first SGSN inside the PS domain, the GGSN, a second SGSN connected to the Controller inside the Access Network of arrival, and the Base Station of the cell serving the data receiver. The dashed line of the IMS signalling departing from either one of the two terminals MT A, MT B for addressing a SIP message to the others crosses in the order: the Base Station of the cell serving the IMS sender, the connected Controller, a first SGSN inside the PS domain, the GGSN, the CSCF block inside the IMS domain, still the GGSN, a second SGSN connected to the Controller inside the Access Network of arrival, and the Base Station of the cell serving the IMS receiver.

From the realization point of view, the DTM Access network is GERAN and the multiRAB is UTRAN. The latter includes a plurality of Node Bs each connected to a respective Radio Network Controller RNC by means of an lub interface. Node B includes a Base Transceiver Station BTS connected to either the multiRAB terminals MT A or MT B through a standard Uu radio interface. RNCs have different roles, e.g.: Serving (S-RNC) or Drift (D-RNC). As known, S-RNC is connected to the CS domain by means of the lu(CS) interface and to the PS domain by means of the lu(PS) interface. D-RNC is connected to the S-RNC by means of an lur interface. UTRAN constitutes a Radio Network Subsystem (RNS) disclosed in TS 23.110. GERAN includes a plurality of BTSs connected to a BSC by means of the Abis Interface and to either the DTM terminals MT A or MT B through the Um radio interface. The BSC is interfaced to the PS domain by means of the Gb interface and to the CS domain by means of the A interface. GERAN constitutes a Base Station Subsystem (BSS) disclosed in TS 43.051.

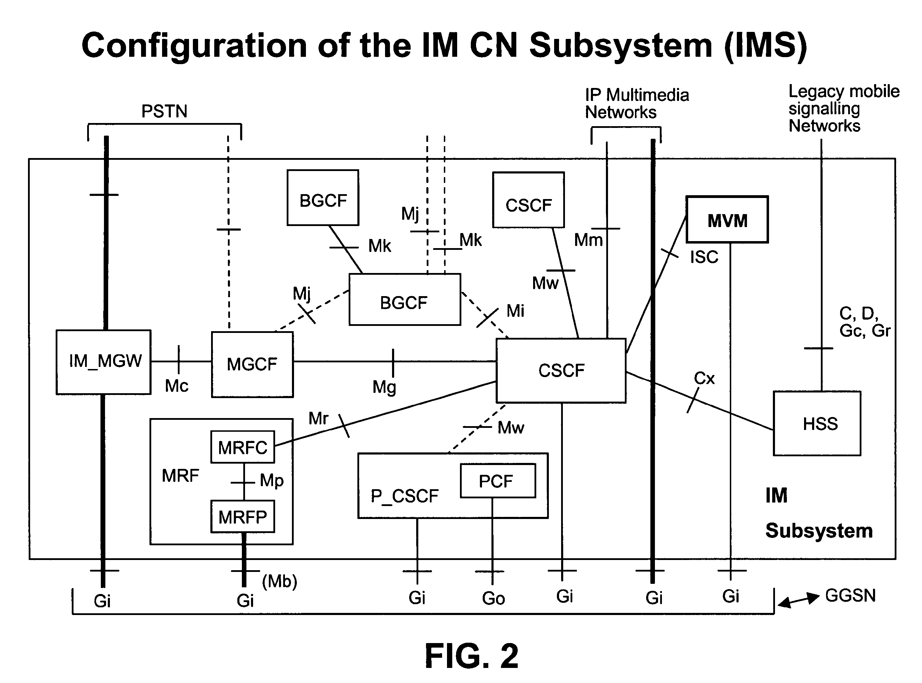

**Fig.2** shows a more detailed representation of the IMS domain of the preceding figure. The functional PLMN architecture standardized by 3GPP (Release 5) is upgraded for the aim of the invention. In the figure, thick lines indicate interfaces supporting user traffic, while dashed lines indicate interfaces supporting only signalling. The reference architecture for IMS subsystem can be found in **[TS_23.002]**. A more exhaustive description of the involved entities can be found in **[TS_23.228]**. The configuration of **fig.2** is a "Logical Model" introduced by 3GPP to define an abstract view of a network by means of information objects representing network elements, aggregations of network elements, the topological relationship between the elements, endpoints of connections (termination points), and transport entities (such as connections) that transport information between two or more termination points. The information objects defined in the Logical Model are used, among others, by connection management functions. In this way a physical implementation independent management is achieved. A Network Element is defined as a discrete telecommunications entity which can be managed over a specific interface.

With reference to **fig.2**, the IMS representation includes the following functional blocks: IM_MGW, MGCF, CSCF, P_CSCF, PCF, BGCF, MRF, MVM, HSS, and DRS. The following reference points (interfaces): ISC, Mb, Mc, Mg, Mr, Mw, Mi, Mj, Mk, Mm, Cx, C, D, Gi, Go, Gc, and Gr are specified between the various blocks, as indicated in the figure. With respect to the standard IMS, the architecture of fig.2 includes an additional DRS block and an application server supporting MVM functionality. In operation, the IM subsystem refers to the set of CN entities using the service provided by the PS domain to offer multimedia services. The CSCF element can act in the following three ways: Presence-CSCF (P-CSCF), Interrogating-CSCF (I-CSCF), Serving-CSCF (S-CSCF). The P-CSCF (Proxy) is the first point of contact for an end-user device when the IMS is contacted from inside the same administrative domain as the IMS. The P-CSCF:
- forward SIP messages;
- translate IDs other than SIP URI into SIP URIs;
- maintain a security association between itself and each UE.
The I-CSCF is the first contact point, when the IMS is contacted by an IMS of another administrative domain. The I-CSCF:
- forward SIP messages;
- obtain from the HSS the address of the S-CSCF;
- conceal the internal network configuration, capacity, and topology.
The serving S-CSCF performs session control and service triggering. The S-CSCF:
- act as registrar (a server that accepts register requests);
- forward SIP messages;
- interact with an application server (not indicated);
- authenticate according to HSS/UMTS data;
- support a proprietary authentication mechanism based on AKA;
- generate CDR.
The HSS is a database which contains IMS subscriber-related information. This database includes data for:
- Identification;
- authorized services;
- subscribed services.
The IM-MGW performs controls over bearers: it may terminate bearer channels from a CS network or media streams from a packet network (RTP streams in IP networks), performs media conversion (optional), process the payload (e.g. codec, echo canceller, conference bridge) and interworks with MGCF for the resource control.
The MGCF selects and communicates with appropriate CSCFs in order to control the part of the call state that belongs to connection control for media channels in an IM-MGW. It also communicates with IM-MGW (out of band signalling) and performs protocol conversion between ISUP (ISDN User Part) and the protocols of IM subsystem.
The BGCF block selects the network in which PSTN breakout is to occur. If it determines that the breakout is to occur in the same network in which the BGCF is located within, then the BGCF shall select a MGCF which will be responsible for the interworking with the PSTN. Otherwise the BGCF will forward this session signalling to another BGCF or an MGCF. Moreover the BGCF can generate CDRs.
The MRF (Multimedia Resource Function) is split into two entities called MRF Controller (MRFC) and MRF Processor (MRFP) with a Mp reference point between them. The following tasks have been identified by 3GPP for these two blocks.
The MRFC:
- interfaces the S-CSCF through the Mr interface using SIP protocol;
- controls the media stream resources in the MRFP;
- interprets information coming from an Application Server (AS) and S-CSCF (e.g., session identifier) and controls MRFP accordingly;
- generates CDRs.
The MRFP:
- controls bearers on the Mb reference point;
- provides resources to be controlled by the MRFC;
- mixes incoming media streams (e.g., for multiple parties);
- sources media streams (for multimedia announcements);
- processes media streams (e.g., audio transcoding, media analysis);
- duplicates data packets.
The MVM is a Multiparty Video Messaging application server which duplicates the multimedia file belonging to a combinational service and delivers the duplicated files to each invited recipient. MVM operation will be detailed later on.
The DRS is a Domain Resolution Server to get the domain name of the peer users involved in the combinational service given theirs MSISDNs. DRS operation will be detailed later on.

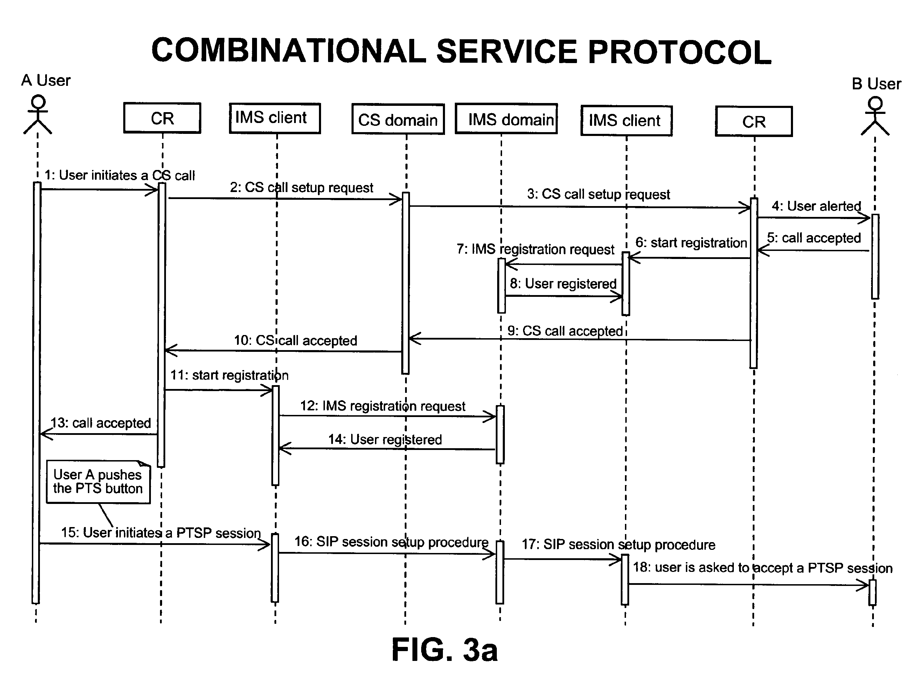

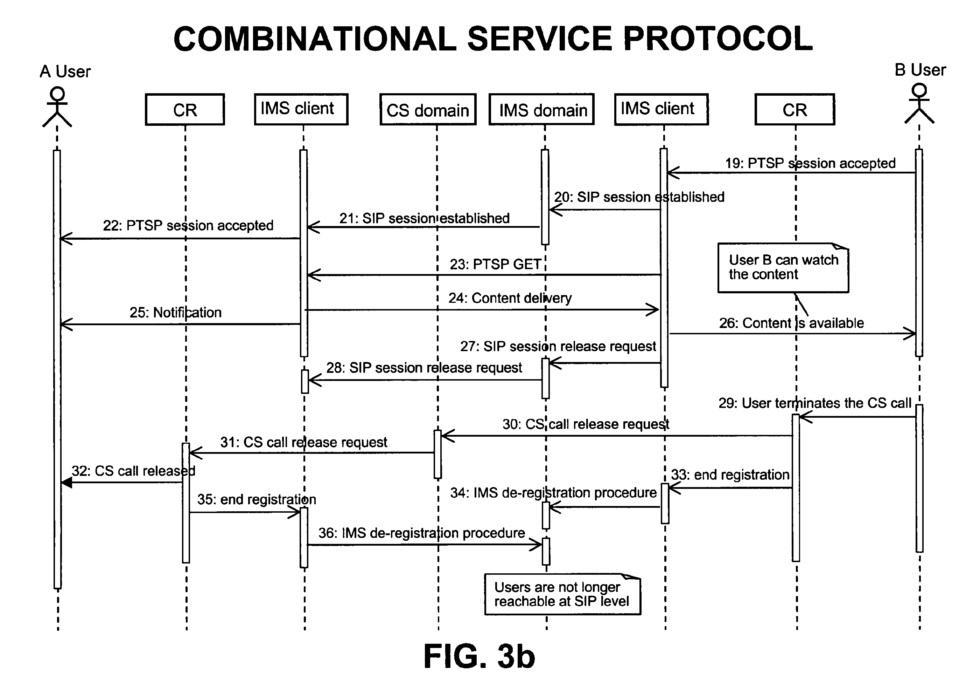

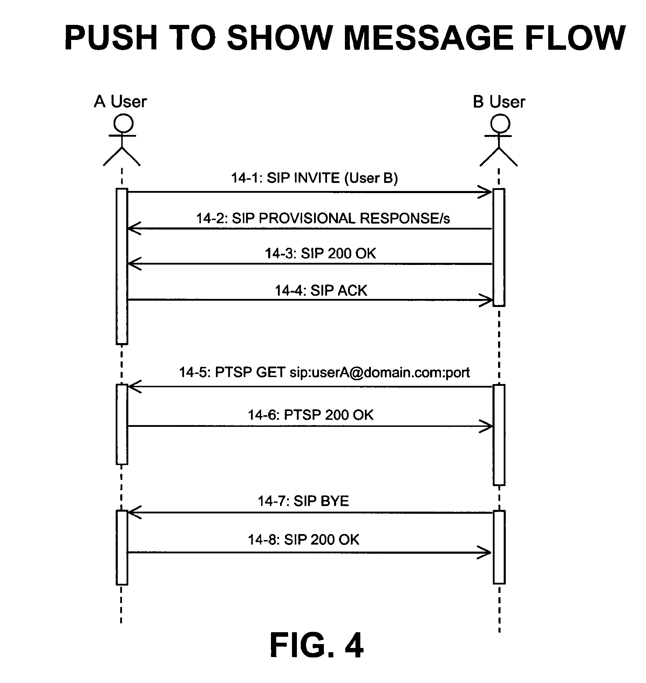

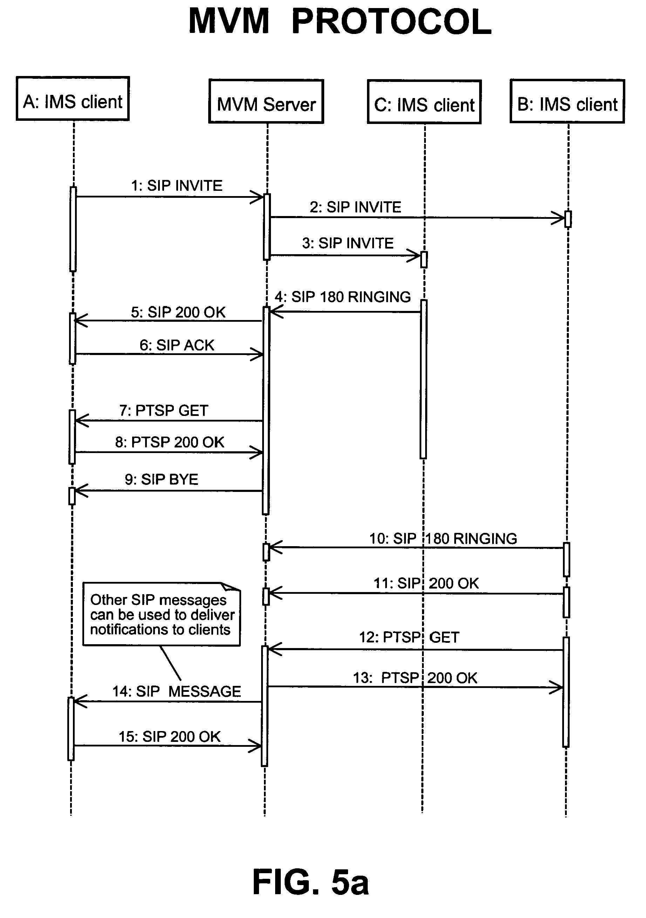

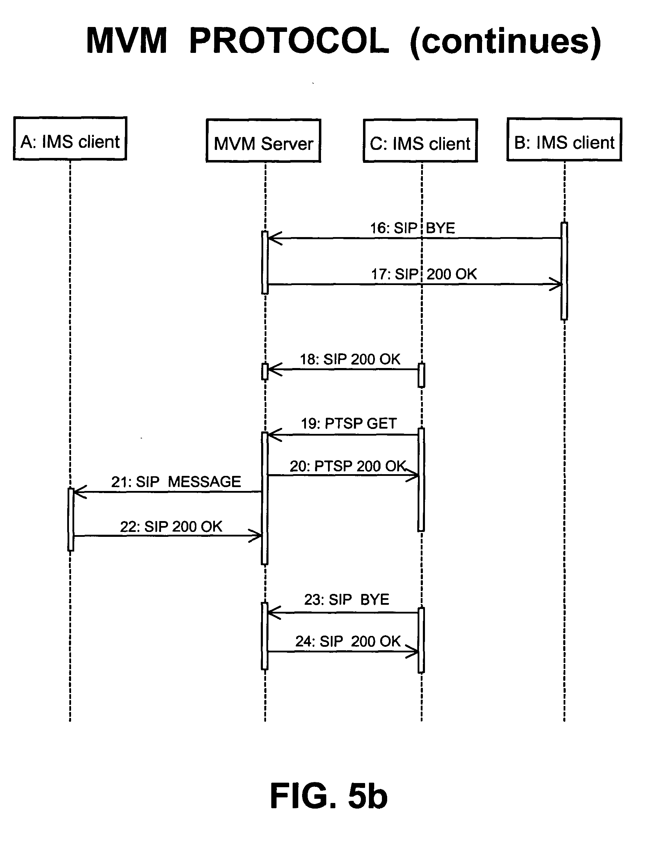

In operation, the IMS platform of **fig.2** provides the following capabilities:
- Access control: the IMS must be able to verify at any time if the user is allowed to use the resources of IMS. To this aim the IMS user shall register himself with IMS before any other things (see TS_23.228).
- Capability negotiation: the IP multimedia applications must have the possibility to identify and select the available media components and the QoS of the sessions. The IM subsystem must allow such negotiations to be started from any party (user, operator, or the application itself on behalf of them) and at any time (at the session invocation, during the acceptance or during the session).
- Redirecting of multimedia session: the IM subsystem must allow the identification of an alternative destination for an IP multimedia session or individual media of an individual session. Similarly to the capability negotiations, the IM subsystem must allow such redirection to be started from any party (the receiving party, the sending party or the network entities on behalf of them), at any time (prior the set up of the session, during the initial request, during the establishment or during the ongoing session).
- Invoking an IP multimedia session: the user must be able to invoke one or more IP multimedia sessions and to activate concurrent applications inside each multimedia session. At this purpose the identification of the entities will be allowed through the use of both Phone and Internet numbering, depending on the ability of the originating party.
- Handling an incoming session: the terminating entity must be able to identify the session originator, to negotiate the capabilities interacting with the user profile and to decide if accept or reject the session. In particular it must be possible to accept only a subset of the offered media.
- Handling of an ongoing session: the user, as said before, must be able to decide about the addition or the deletion of media components of IP multimedia applications during a session. Moreover it must be possible for the user to suspend and resume at a later time a multimedia session.
- Ending a session: the user must be able to end an ongoing session at any time.
- Local Services: the users must be able to access, while roaming outside the home environment, services of local nature offered by the visited network.
- Giving support to combinational services, in particular to PTS service according to the protocol of **fig.3a, 3b**, and **fig.4** and its extension for MVM according to the protocol of **fig.5a** and **5b**.

With reference to **fig.3a** and **3b**, all the elements involved in the combinational service are indicated on top of the figure. The exchanged messages are numbered sequentially. The sequence is discussed below:
1. User A puts the receiver off hook and dials the telephone number of User B to start a CS call;
2. Call Recognizer of User A intercepts the originated signalling and forward it to the CS Domain;
3. CS Domain forward a call attempt message (typically paging and ringing) to the CR of User B;
4. call attempt is ringing the mobile handset of User B;
5. User B puts the receiver off hook to accept the CS call;
6. CR of User B intercepts the call acceptance and sends a command to its EIC to start the IMS registration of User B;
7. EIC of User B sends an IMS registration request to the IMS domain;
8. registration of User B is executed and the EIC of User B is informed by IMS domain that User B is registered to IMS;
9. CR of User B sends a CS call accepted message to the CS domain (this step can be executed in parallel to step 6.);
10. the call accepted message is forwarded to the CR of User A;
11. CR of User A sends a command to its EIC to start the IMS registration;
12. EIC of User A sends an IMS registration request to the IMS domain;
13. call accepted message is forwarded to User A (free tone is taken-over from conversation);
14. registration of User A is executed and EIC of User A is informed by IMS domain that User A is registered to IMS;
15. User A pushes the PTS button on his terminal to send a push to show request message to its EIC (at this point in time the IMS registration procedures of the two users is supposed to be completed);
16. EIC of User A initiates a SIP session set up procedure with the IMS domain;
17. IMS domain prolongs the SIP session set up procedure with the EIC of User B;
18. EIC of User B asks the User B for accepting the PTS session;
19. User B sends to the EIC his acceptance to the PTS session;
20. EIC of User B establishes a SIP session with IMS domain;
21. IMS domain prolongs the SIP session establishment to the EIC client of User A;
22. EIC client communicates to User A the PTS acceptance from User B;
23. EIC client of User B sends a PTS GET message to the EIC client of User A to the aim of having returned the multimedia content;
24. EIC client of user A delivers the multimedia content to the EIC client of User B;
25. EIC client of User A notifies to User A the multimedia content is delivered;
26. EIC client of user B delivers the multimedia content to User B who can watch the content (i.e. an image) on his display;
27. EIC client of User B sends a SIP session release request to IMS domain;
28. SIP session release request is forwarded to the EIC client of User A;
29. User B hangs-up to terminate the CS call;
30. CR of User B intercepts the hang-up condition and sends CS call release signalling to the CS domain;
31. CS domain forwards the CS call release signalling to the CR of User A;
32. CR of User A intercepts the CS call release signalling and informs User B;
33. CR of User B sends an end registration command to the EIC;
34. EIC s of User B starts with IMS domain the IMS de-registration procedure of User B;
35. CR of User A sends an IMS end registration command to the EIC;
36. EIC of User A starts with IMS domain the IMS de-registration procedure of User A and the two Users are not longer reachable at SIP level.

The CR process running inside a mobile terminal shall be able to detect the good end of a CS call independently of the call is either originated or terminated. In case of originated call the CR of the caller checks the issue of originated signalling, i.e. off hook and dialling, and waits for the off hook signalling from the callee. A positive detection of the two types of signalling triggers the recognition of the originated call. Similarly, in case of call terminated on the callee, the CR of the callee checks the issue of terminated signalling, i.e. paging message addressing the callee, and waits for the off hook signalling from the callee. A positive detection of the two type of signalling triggers the recognition of call terminated on the callee. Because of the same mobile terminal can be either caller or callee, its internal CR process must be able to manage both the situations. To this aim the CR process, starting from the idle CS state, continuously checks the incoming signalling to detect if an incoming CS call is either originated from or terminated to the user. The outcome of the detection is stored as preliminary condition to wait for call acceptance. In the case of originated call, the call acceptance is waited from the CS domain, wile in case of terminated call the call acceptance is waited from the host mobile terminal. The call acceptance for the stored condition recognises the state of incoming call established and the CR automatically starts the IMS registration procedure of the user. The CR process also operates to detect the CS call release. In this case, starting from the CS call established state, the CR continuously checks for either hang-up (on hook) signalling from the host mobile terminal or call release signalling from the CS domain. Once either one of the two types of signalling is detected the ongoing call is released and the IMS de-registration procedure of the user either automatically started or on request by the user.

Now the following steps are better detailed: IMS registration procedure; SIP session set up procedure; and transmitting the recorded multimedia file end-to-end.

During IMS registration procedure, in order to declare the Client capabilities each IMS user shall include in the Contact header field of SIP REGISTER request message the media feature tags indicating the specific PS services (e.g. PTS, MVM) supported by the client (see: preferences caller I-D). The IMS core may use this information for routing. IMS core should handle feature tags as follows. During IMS registration the EIC shall register service feature tags, for example:
(Contact:*;+pts="TRUE";+mvm="TRUE";methods="INVITE") in order to indicate to the IMS core that the EIC is able to handle both PTS and MVM session requests.
- The IMS core stores the service feature tags.
- On originating side, when the EIC initiates a talk session, the UE shall include the Accept-Contact header and the SIP Require header with the string "pref' in the SIP INVITE request.
- On terminating side, when the IMS core receives a SIP INVITE request with the Accept-Contact header included, the IMS core forwards the request only if destination EIC registered the same feature tag otherwise a "480 Temporarily not available" response is returned.

During **SIP session set up procedure** required to verify peer willingness to accept the recorded video, the IMS user sends a SIP INVITE request containing the Accept-Contact header with a media feature tag indicating the specific PS service. The IMS core shall be able to identify the request as PTS or MVM communication by inspecting the Accept-Contact header. Being PTS, MVM and other combinational services based on IMS, the SIP address of peer user/users must be known. In case the SIP address of a peer cannot be extracted from the local address book, it can be derived as explained below from TEL URL, e.g.: TEL URLs are resolved in SIP URLs with a DNS lookup as foreseen by ENUM working group in the IETF. In the EIC based solution, CR should be also responsible for identifying the MSISDN number of the callee for outgoing calls and of the caller for incoming calls, so that EIC is enabled to automatically derive the IMS identity of the peer user (i.e. the remote user involved in the audio call) from the TEL URL built combining the peer user MSISDN with the proper domain, e.g. +393351234567 → tel:+393351234567@operator.com. IMS identity and IP identity are synonyms. In order to support inter domain scenarios, the EIC should query the new resolution server named Domain Resolution Server (DRS) to get the domain name (e.g. operator.com) of the peer user given his MSISDN (e.g. +393351234567). A DRS should be present in each IMS domain and should be able to interact with DRSs of other IMS domains to get the correct domain name. Additional information shall be included in the body of the SIP INVITE request message in order to support file transfer derived from the push-to (PTS/MVM) request. For the sake of simplicity these information are detailed in the next paragraph.

**Transmitting recorded multimedia file end-to-end** implements a reliable instant transfer data transmission between User A and User B through a TCP socket opportunely established between them. TCP ports to be used must be negotiated during the SIP session. [RFC0793] recites textually: *"To allow for many processes within* a *single Host to use TCP communication facilities simultaneously, the TCP provides* a *set of* addresses or *ports within each host. Concatenated with the network and host addresses from the internet communication layer, this forms* a *socket. A pair of sockets uniquely identifies each connection. That is, a socket may be simultaneously used in multiple connections. Establishing and learning the port addresses of other processes may involve more dynamic mechanisms".* Let's define now new features that have been introduced to the SDP body of SIP INVITE in order to support reliable file transfer end-to-end.
m=**file** <port> TCP <mime/type>
This line in the SDP protocol states that a file is exchanged, on the given port, transported by the TCP protocol, with the given mime/type. Reference to MIME is [RFC2046]. The new feature is the definition of the new media type "file".
m=**files** 3456 TCP multipart/mixed
The "files" media type must be always used with the "multipart/mixed" media format and must always be followed by media lines with "file" media type.
a=**connection:<behavior>**
This feature defines the behaviour at the endpoint of the attribute "connection". The <behavior> may assume two values, **client** or **server**, depending on the fact that the endpoint is sending the file (server) or receiving it (client).
a=**size:<size>**
The size attribute states the size of the file that will be transferred.
a=**boundary**:eruhbvr874jvc9cjd990ejc
The boundary attribute takes the value of an alphanumeric string which must be set between adjacent files when the "files" media type is set. This states that more than one file will be transferred.

The PTS command issued by peer User B to get back the multimedia file from User A is based on HTTP syntax as follows:
GET sip:<host>@<domain.com>:<port>
Call-ID:<call id>
The port value is set to the port where the socket will be connected. The <call id> value is the one of the SIP message, otherwise the connection will be denied. The response follows the HTTP syntax as the request. The file's byte stream will follow the starting line. In case more than one file is sent, a boundary line, as defined in the SDP, will be sent between two files. The "Expires" header defines for how long the content that is transferred is valid.

**Fig.4** highlights the type of messages exchanged peer-to-peer during the SIP session of the preceding **figures 3a** and **3b** spanning steps 14-28. With reference to **fig.4**, the initial condition is that User A and User B are engaged in a CS voice call after which:
14.1) sip: INVITE request message addressing User B is sent by User A which had performed the push action;
14.2) provisional response stating his willing to receive the multimedia file is sent back by User B;
14.3) 200 OK message is sent by User B;
14.4) ACK message is sent by User A
14.5) PTS command: GET sip:userA@domain.com:port is sent by peer User B to get the multimedia file from User A;
14.6) 200 OK message is sent by User A. Follows a transmission of bytes of the multimedia file via-socket from User A;
14.7) upon reception of the multimedia file is completed sip: BYE message is sent back by user B;
14.8) 200 OK message is sent by User A.

The gained advantages of the via-socket transmissions are better performances and control over the file transfer. From a user's point of view a lower transfer time is experienced compared to MMS.

Now the MVM protocol is discussed under non limiting hypothesis that the instant and reliable transfer of mobile recorded audio/video content from the sender (User A) is directed to more than one recipient (Users B and C) who are selected from the address book, by simply pushing a button on the mobile phone of the sender after the successful establishment of a circuit switched voice call either multiparty (User A and B and C) or with the peer user (User A and either B or C). In any case the MVM protocol is an extension of PTS for providing more than one recipients with the same multimedia content. To this aim **figures 5a** and **5b** illustrate the evolution of the SIP session of **fig.4** for the case of two recipients.

With reference to **figures 5a** and **5b**, the elements considered in point to multipoint transmission of multimedia contents are indicated on top of the figure. The exchanged messages are numbered sequentially. The sequence is discussed below:
1. IMS client (EIC) of User A sends a SIP INVITE message including the SIP URIs of both User B and User C in its body to the MVM server;
2. MVM server prolongs the INVITE to User B;
3. MVM server prolongs the INVITE to User C;
4. IMS client of User C sends a SIP 180 message (ringing) to the MVM server;
5. MVM server returns a SIP 200 reply (OK) to the IMS client of User A;
6. IMS client of User A sends a SIP ACK message to the MVM server;
7. MVM server sends a PTS GET command to the IMS client of User A to get the multimedia file from User A and store it;
8. IMS client of User A sends SIP 200 replay to the MVM server. Follows a transmission of bytes of the multimedia file via-socket from User A to the MVM server;
9. upon reception of the multimedia file is completed, SIP BYE message is sent back by the MVM server to the IMS client of User A;
10. SIP 180 message is sent by the IMS client of User B to the MVM server;
11. SIP 200 replay is sent by the IMS client of User B to the MVM server;
12. PTS GET command is sent by the IMS client of User B to the MVM server to get the stored multimedia file;
13. SIP 200 replay is sent by the MVM server to User B. Follows a transmission of bytes of the multimedia file via-socket from the MVM server to User B;
14. MVM server sends a SIP MESSAGE notification message to the IMS client of User A to inform it on delivering the file to User B;
15. IMS client of User A sends SIP 200 replay to the MVM server;
16. IMS client of User B sends a SIP BYE message to the MVM server;
17. MVM server returns SIP 200 replay to the IMS client of User B;
18. IMS client of User C sends SIP 200 replay to the MVM server;
19. PTS GET command is sent by the IMS client of User C to the MVM server to get the stored multimedia file;
20. SIP 200 replay is sent by the MVM server to User C. Follows a transmission of bytes of the multimedia file via-socket from the MVM server to User C;
21. MVM server sends a SIP MESSAGE notification message to the IMS client of User A to inform it on delivering the file to User C;
22. IMS client of User A sends SIP 200 replay to the MVM server;
23. IMS client of User C sends a SIP BYE message to the MVM server;
24. MVM server returns SIP 200 replay to the IMS client of User C.

To implement combinational services according to the method of the present invention, some modifications must be introduced both in the mobile terminal and the IMS core. Modifications inside the mobile terminal mainly concern: inclusion of the CR process into the User client; upgrading the SIP INVITE message; negotiating the TCP socket for transfer file, and obtaining the GET command to transfer file. Modifications inside the IMS core mainly concern the constitution of the PTS server and optionally the MVM server. Based on the given description and considering that techniques to translate signalling protocols like the one of relevant figures into the firmware included in the mobile phone and the network are known and already implemented in the existing PLMNs, the one skilled in the art should use these techniques to impress the new protocol features into the existing firmware. The added firmware impacts on CPU and memory and, limitedly to the PTS server, implements large look-up tables.
While a particular embodiment of the present invention has been shown and described, it should be understood that the present invention is not limited thereto since other embodiments may be made by those skilled in the art without departing from the ambit thereof. One of these modifications is to consider also the case where the SIP session is used to transfer any multimedia content (e.g. audio, video, data, etc) either in real time (e.g. via RTP/RTCP) or in non real time (e.g. via SIP MESSAGE, MSRP, PTSP) between the two users involved in the audio call.

### USED ACRONYMS

3GPP - 3^{rd} Generation Partnership Program
AKA - Authentication and Key Agreement
AS - Application Server
BSC- Base Station Controller
BTS - Base Transceiver Station
CDR - Charging Data Record
CPU - Central Processing Unit
CS - Circuit Switched
CR - Call Recogniser
CSB - Circuit Switched Bearer
CSCF - Call State Control Function
DNS - Domain Name Server
DRS - Domain Resolution Server
DTM - Dual Transfer Mode
EIC - Extended IMS Client
GERAN - GSM/EDGE Radio Access Network
GGSN - Gateway GPRS Support Node
GPRS - General Packet Radio Service
HSS - Home Subscriber Server
HTTP - Hypertext Transfer Protocol
I-CSCF - Interrogating CSCF
I-D - Internet Draft
IETF - Internet Engineering Task Force
IM - Instant Messaging
IM - IP Multimedia
IMS - IP Multimedia core network Subsystem
ISDN - Integrated Services Digital Network
MCDF - Media Control and Duplication Function
MGCF - Media Gateway Control Function
MGW - Media Gateway Function
MIME - Multipurpose Internet Mail Extensions
MMS - Multimedia Messaging Service
MRF - Multimedia Resource Function
MRFC - MRF Controller
MRFP - MRF Processor
MSRP - Message Session Relay Protocol
MS - Mobile Station
MSISDN - Mobile Subscriber ISDN Number
MTU - Message Transport Unit
MVM- Multiparty Video Messaging
OMA - Open Mobile Alliance (http://www.openmobilealliance.org) PCF - Policy Control Function
P-CSCF - Proxy CSCF
PoC - PushToTalk over Cellular
PS - Packet Switched
PTS - Push To Show
PTSP - Push To Show Protocol
PTT - Push To Talk
QoS - Quality of Service
RAB - Radio Access Bearer
RFC - Request for Comments
RNC - Radio Network Controller
RTP - Real-time Transport Protocol
S-CSCF - Serving CSCF
SDP - Session Description Protocol
SGSN - Serving GPRS Support Node
SIP - Session Initiation Protocol
TCP - Transport Control Protocol
TS - Technical Specification
UDP - User Datagram Protocol
UE - User Equipment
UMTS - Universal Mobile Telecommunication System URI - Uniform Resources Identifier
URL - Uniform Resources Locator
UTRAN - UMTS Terrestrial Radio Access Network

### REFERENCES

- [TS_22.101]: 3GPP TS 22.101 V 6.7.0, "Service Principles", Release 6, (March 2004).
- FS_23.002: 3GPP TS 23.002 V 6.1.0, "Network Architecture", Release 5, (June 2003).
- [TS_22.228]: 3GPP TS 22.228 V 6.5.0, "Service requirements for the Internet Protocol (IP) multimedia core network subsystem"; Stage 1, Release 6, (January 2004).
- [TS_23.228]: 3GPP TS 23.228 V 6.5.0, "IP Multimedia Subsystem (IMS)", Release 6, (March 2004).
- [TR_23.899]: 3GPP TR 23.899 V 0.2.0, "Report on alternative architectures for combining CS Bearers with IMS"; Release 6, (May 2004).
- [S1_040397]: CHANGE REQUEST S1_040397 to 3GPP TS 22.101 V 6.7.0. Shenzhen, China, 10-14 May 2004.
- [PoC_User]: Push-to-Talk over Cellular (PoC) User Plane Transport Protocols; PoC Release 1.1.0 (August 2003).
- [RFC2327]: IETF RFC 2327 "SDP: Session Description Protocol", April 1998
- [RFC2046]: IETF RFC 2046 "MIME: Multipurpose Internet Mail Extensions Part Two: Media Types", November 1996.
- [RFC2616]: IETF RFC 2616 "HTTP/1.1: Hypertext Transfer Protocol", June 1999.
- [RFC3261]: IETF RFC 3261 "Sip Initiator Protocol", June 2002.
- [RFC0793]: IETF RFC 0793 or STD 0007, "Transmission Control Protocol", J. Postel, Sept. 01 1981.

## Claims

1. Method for implementing combinational services inside a PLMN constituted by an Access Network connected to a Core Network subdivided into CS domain, PS domain, and IP multimedia core network subsystem, or IMS, where a combinational service being constituted by a CS voice call established between two either multiRAB or DTM mobile terminals to which at least an IP multimedia session is added up for transferring at least a recorded multimedia content between said terminals (MT A, MT B) during the ongoing call, **characterized in that** includes the steps of:
a) detecting by said terminals (MT A, MT B) the establishment instant of the CS voice call for triggering separated IMS registration procedures in order to register the respective owners (A, B) as SIP users and provide IMS with a description about the capabilities of said terminals (MT A, MT B) on handling instant file transfer services;
b) pushing a button on either one of said terminals (MT A, MT B), or performing any action resulting in the setup of a SIP service session between user (A) and user (B) used to verify the peer willingness to share multimedia content and negotiate media session characteristics;
c) detecting by said terminals (MT A, MT B) the release instant of the CS voice call for triggering, either automatically or on request, separated IMS de-registration procedures of the respective users (A, B).

2. The method of the preceding claim, **characterized in that** the IMS Client process (EIC) running inside the mobile terminal (MT A, MT B) is extended to include a Call Recognizer process (CR) which:
- starting from the idle CS state, continuously checks the incoming signalling to detect if an incoming CS call is either originated from (A) or terminated (B) to the user;
- stores the outcome of the detection as preliminary condition to wait for call acceptance, in case the stored condition is for originated call, the call acceptance is waited from the CS domain, wile in case of terminated call the call acceptance is waited from the host mobile terminal (MT A, MT B);
- detects the call acceptance for the stored condition to state the very establishment instant of the CS voice call.

3. The method of the preceding claim, **characterized in that** the Call Recognizer process (CR), starting from the CS call established state:
- continuously checks for call release signalling either from the host mobile terminal (MT A, MT B) or from the CS domain;
- detects either one of the two types of signalling to state the very release instant of the ongoing call.

4. The method of any preceding claim, **characterized in that** in order to support file transfer from the two handsets involved in the audio call, the following line is added to the SDP protocol used by a SIP INVITE request message transmitted by the requesting user (A) to start up the SIP session:
m=file <port> TCP <mime/type>
where "file" is an attribute to state that a multimedia file is exchanged at the given TCP port.

5. The method of the preceding claim, **characterized in that** the following line is added to the SDP protocol:
a=size:<size>
where "size" is an attribute to define the size of the file that will be transferred.

6. The method of the preceding claim, **characterized in that** the following line is added to the SDP protocol:
m=files <port> TCP multipart/mixed
where "files" is an attribute to state that that two or more multimedia files are exchanged at the given TCP port.

7. The method of the preceding claim, **characterized in that** the following line is added up to the SDP protocol:
a=boundary: <string>
where "boundary" is an attribute to set a boundary string between files.

8. The method of any claim from 4, **characterized in that** the following line is added to the SDP protocol:
a=connection:<behavior>
where "connection" is an attribute to define the behaviour at the endpoint of the connection; where the <behavior> may assume two values, client or server, depending on the fact that the endpoint is sending the file or receiving it.

9. The method of the preceding claim, **characterized in that** said command issued by the peer user (B) at the endpoint configured as client is based on HTTP syntax as follows:
GET sip:<host>@<domain.com>:<port>
Call-ID:<call id>
where:
- <host@domain.com> is the IP address of the requesting user (A) at the endpoint configured as server,
- <port > value is set to the port assigned to the TCP socket,
- <call id> value is the same Call identifier used by the SIP INVITE message.

10. The method of any claim from 4, **characterized in that** upon the push action by the requesting user (A) said recorded multimedia file is sent to a Multiparty Video Messaging Server inside the IMS to be duplicated and forwarded to other participating the service (B, C).

11. The method of claim 1, **characterized in that** said meltimedia content are transferred in real time fashion;

12. The method of claim 1, **characterized in that** said multimedia content are transferred non real time fashion.

13. IP multimedia core network subsystem, or IMS, connected to a PLMN to give support to combinational services in the IMS domain, each combinational service being constituted by a CS voice call established between either multiRAB or DTM mobile terminals to which at least an IP multimedia session is added for transferring at least a recorded multimedia file between more than two mobile terminals, **characterized in that** includes a Multiparty Video Messaging server (MVM) having means to intercepts the multimedia file transmitted by a sender and duplicate it to be transferred to other participants the combinational service.

14. Cellular phone, either multiRAB or DTM, usable in a PLMN connected to IMS for implementing combinational services like transfer at least a recorded multimedia file between mobile terminals (MT A, MT B) engaged in a CS voice call, **characterized in that** includes:
- CS voice call set up recognising means (CR) arranged for detecting an off hook condition and automatically trigger the IMS registration procedure of the owner user (A, B);
- CS voice call tear down recognising means (CR) arranged for detecting a hang up condition and trigger the IMS de-registration procedure of the owner user either automatically or on request ;
- user activated pushing means for triggering the instant transfer of said multimedia file through a TCP socket.
